# EUROPEAN PATENT APPLICATION

(11) **EP 1 677 298 A2**
(43) Date of publication of application: **05.07.2006**
(21) Application number: 05028413.2
(22) Date of filing: 23.12.2005
(51) Int. Cl.: G11B 17/04

(54) **Electronic apparatus including a disk apparatus**

(30) Priority: 28.12.2004 JP 2004381414
(71) Applicant: Orion Electric Company, LTD., Echizen-shi, Fukui-ken (JP)
(72) Inventor: Watanabe, Kazuhiro, Echizen-shi Fukui-ken (JP)
(74) Representative: Kirschner, Klaus Dieter

(57) **Abstract**

A relay gear, a second gear, rotation rollers, and a first gear interlocking with a driving motor are arranged on a first base, and a DVD disk is carried by these rotation rollers and fixed rollers supported by a second base. An arm contacts with an outer circumferential edge of the DVD disk thus carried and is forced rearward. This operation causes a cam arm to move a slider using a cam groove coupling portion of the slider. After positioning the DVD disk, any one of rack gears is engaged with the first gear, whereby the driving motor drives one rotation roller, one fixed roller, and the arm to be separated from the outer circumferential edge of the DVD disk.

## Description

The present invention relates to an electronic apparatus that includes a slot-in type disk apparatus configured so that a disk is carried into the disk apparatus with an outer circumference of the disk put between rollers, and that any one of a disk having an outside diameter of eight centimeters and a disk having an outside diameter of twelve centimeters can be accurately carried and positioned by one loading motor.

Conventionally, as a mechanism for carrying a disk which is a recording medium into a disk apparatus, positioning the disk to a predetermined position, and mounting the disk on a turntable, there is known, for example, "a disk recording and/or reproducing apparatus" disclosed in Japanese Patent Application Laid-Open No. 2002-304798. According to this conventional technique, to carry an eight-centimeter disk or a twelve-centimeter disk using a pair of a rotation roller and a fixed roller, which are arranged in an opening of the disk apparatus, and to position the disk to a predetermined position for mounting the disk on a turntable, a first motor that drives the rotation roller that carries the disk, a second motor that drives a disk positioning arm using a cam mechanism are arranged, and a plurality of sensor switches for detecting a magnitude and a position of the disk, a rotation position of the arm, a longitudinal position of a rack plate and the like are arranged.

Further, as a conventional mechanism for carrying, positioning, and clamping such a disk, there is known, for example, "a power transmission mechanism for performing disk carrying and clamping operations in a disk apparatus" disclosed in Japanese Patent Application Laid-Open No. 2004-152346. According to this conventional technique, by configuring the mechanism that is applicable only to a twelve-centimeter disk, the mechanism drives operations from disk carrying to disk clamping by means of one motor.

According to the former conventional technique, in the disk carrying mechanism for carrying the disk while abutting the paired rotation roller and fixed roller arranged in the opening of the disk apparatus on an outer circumferential edge of the disk, it is necessary to set a stroke wide so as to enable the paired rollers to move in a diameter direction of each of the eight-centimeter disk and the twelve-centimeter disk since the rollers are abutted on disk outer circumferential edges of the disks having different outside diameters, i.e., the disk having a larger outside diameter of twelve centimeters and the disk having a smaller outside diameter of eight centimeters so as to carry both the disks. It is, therefore, difficult to directly connect the motor for driving the rotation roller to rotate with the motor for driving the arm for positioning the disks having different outside diameters with a tip end of the arm abutting on the outer circumferential edges of the disks, to rotate, by means of driving force transmission mechanism such as a gear. Due to this, it is disadvantageously necessary to arrange the first motor for driving the rotation roller for carrying the disk and the second motor for driving the disk positioning arm using the cam mechanism. In addition, it is disadvantageously necessary to arrange a plurality of the sensor switches for detecting the magnitude and position of each disk, the rotation position of the arm, the longitudinal position of the rack plate, and the like. According to the latter conventional technique, by configuring the mechanism to be applicable disadvantageously only to the twelve-centimeter disk, the operations from the disk carrying to the disk clamping are driven by one motor.

The present invention has been achieved to solve the conventional disadvantages. It is an object of the present invention to provide a disk driving mechanism for driving operations from disk carrying to disk clamping, which mechanism does not need to arrange two motors, i.e., a first motor for driving a rotation roller for carrying each of a disk having a larger outside diameter of twelve centimeters and a disk having a smaller outside diameter of eight centimeters and a second motor for driving a disk positioning arm using a cam mechanism so as to carry any one of the disks, and which can dispense with a plurality of sensor switches for detecting a magnitude and a position of each disk, a rotation position of an arm, a longitudinal position of a rack plate and the like, or which mechanism can be applied to both the disks using one motor with a simple structure, hereby solving the problem of the conventional mechanism which can be applied only to a disk having a larger diameter of twelve centimeters and not to a disk having a smaller diameter of eight centimeters.

According to a first aspect of the present invention, there is provided an electronic apparatus including a disk apparatus that comprises: transport rollers constituted by a pair of rotation rollers and a pair of fixed rollers for putting a disk-like recording medium therebetween in a diameter direction of the disk-like recording medium; and a driving motor that drives the rotation rollers to rotate, the driving motor caused to drive the rotation rollers to rotate to thereby carry the disk-like recording medium from a disk inlet and outlet port to a disk attachment portion in which information is recorded or reproduced in or from the disk-like recording medium, an arm rotatably and pivotally attached to the disk apparatus, the arm contacting with an outer circumferential edge of the disk-like recording medium thus carried to the disk attachment portion and positioning the disk-like recording medium to the disk attachment portion, wherein the disk apparatus further comprises: a first base that supports the rotation rollers and the driving motor, a second base that supports the fixed rollers, and a slider that drives the arm, and wherein a first gear engaged with a rack gear provided on the slider, a second gear that integrally rotates with the rotation rollers, and a plurality of relay gears engaged with the first gear, the second gear, and a driving gear provided on an output shaft of the driving motor, respectively are axially supported by the first base, whereby the one driving motor drives both the rotation rollers that carry the disk-like recording medium and the slider.

According to a second aspect of the present invention, in the electronic apparatus including the disk apparatus according to the first aspect, there is provided an electronic apparatus including a disk apparatus, wherein the slider has a first rack gear and a second rack gear provided in parallel to correspond to different diameters of the disk-like recording medium, an interlocking mechanism is provided for the first base and the second base so as to move the first base and the second base in a direction away from each other in an interlocking manner with an operation for inserting the disk-like recording medium from the disk inlet and outlet port, and an urging member that urges the first base and the second base in a direction closer to each other is provided between the first base and the second base, the urging member enabling the disk-like recording medium to be elastically put between the rotation rollers and the fixed rollers.

According to a third aspect of the present invention, in the electronic apparatus including the disk apparatus according to the second aspect, there is provided an electronic apparatus including a disk apparatus, wherein a cam arm is formed on the arm, and cam grooves engaged with the cam arm are formed in the slider, the disk-like recording medium contacts with the arm and the arm starts moving in an interlocking manner with an operation for carrying the disk-like recording medium by rotation of the rotation rollers, when the disk-like recording medium is carried to the disk attachment portion, the cam arm is engaged with the cam grooves, thereby starting engaging the first gear with any one of the first rack gear and the second rack gear, the driving motor drives the slider to slide in a carrying direction of the disk-like recording medium by engagement of the first gear with any one of the first rack gear and the second rack gear, whereby the arm is driven to rotate in a direction away from the disk-like recording medium by the cam arm engaged with the cam grooves, and the first rack gear or the second rack gear is inclined inward along the carrying direction of the disk-like recording medium, whereby the rotation rollers and the fixed rollers, between which the disk-like recording medium is put, are moved to be separated from the disk-like recording medium along an inclination of the first rack gear or the second rack gear in an interlocking manner with a slide operation of the slider in the carrying direction of the disk-like recording medium.

According to a fourth aspect of the present invention, in the electronic apparatus including the disk apparatus according to the third aspect, there is provided an electronic apparatus including a disk apparatus, wherein the cam grooves are arranged generally in parallel to each other while forming the first cam groove that guides the cam arm inside and the second cam groove coupled with the first cam groove outside, and the arm is applied with a spring property so as to be able to press the outer circumferential edge of the disk-like recording medium.

In the electronic apparatus including the disk apparatus according to the first aspect of the present invention, the rotation rollers can be rotated by the one driving motor arranged on the first base, the relay gears that relay a driving force of the driving motor, and the second gear engaged with the relay gears. The disk-like recording medium can be carried into the disk apparatus while the disk-like recording medium is put between the rotating rotation rollers and the fixed rollers supported by the second base. In addition, the driving force of one driving motor arranged on the first base can drive the slider by engaging the first gear, which is engaged with the second gear, with one of the rack gears provided on the slider. The one driving motor that drives both the rotation rollers and the slider makes it possible to carry the disk-like recording medium and to position the disk-like recording medium by driving the arm using the slider.

In the electronic apparatus including the disk apparatus according to the second aspect of the present invention, if the disk-like recording medium out of the disk-like recording mediums different in diameter is inserted from the disk inlet and outlet port, the distance between the rotation rollers supported by the first base and the fixed rollers supported by the second base is widened to correspond to any one of the disk-like recording mediums different in diameter by the interlocking mechanism for moving the first base and the second base in the direction away from each other. Besides, the disk-like recording medium can be elastically put between the rotation rollers and the fixed rollers by the urging member that urges the first base and the second base in the direction closer to each other. It is, therefore, possible to stably carry any one of the disk-like recording mediums while putting the disk-like recording medium between the rotation rollers and the fixed rollers.

In the electronic apparatus including the disk apparatus according to the third aspect of the present invention, the cam arm formed on the arm is engaged with the cam grooves formed in the slider, the disk-like recording medium contacts with the arm in the interlocking manner with the carrying operation for carrying the disk-like recording medium by the rotation of the rotation rollers, and the disk-like recording medium is then carried to the disk attachment portion. The engagement of either the first rack gear or the second rack gear with the first gear starts by the engagement of the cam arm with the cam grooves. The driving motor drives the slider to slide in the carrying direction of the disk-like recording medium, whereby the arm is driven to rotate by the cam arm engaged with the cam grooves and can be separated from the disk-like recording medium. In addition, the first rack gear or the second rack gear is inclined inward along the carrying direction of the disk-like recording medium. The rotation rollers and the fixed rollers, between which the disk-like recording medium is put, are moved along the inclination of the first rack gear or the second rack gear in the interlocking manner with the slide operation of the slider in the carrying direction of the disk-like recording medium, whereby the rotation rollers and the fixed rollers can be separated from the disk-like recording medium. Therefore, after the disk-like recording medium is positioned to the disk attachment portion, the arm, the rotation rollers, and the fixed rollers are separated from the disk-like recording medium. The disk apparatus can thereby record or reproduce information in or from the disk-like recording medium while rotating the disk-like recording medium in the disk attachment portion.

In the electronic apparatus including the disk apparatus according to the fourth aspect of the present invention, it is possible to stably position and carry any one of the disk-like recording mediums different in diameter. Further, according to the present invention, the simple mechanical structure enables the disk apparatus to be applicable to both the disk-like recording mediums different in diameter. Therefore, it is unnecessary to use a plurality of motors and a plurality of sensors differently from the conventional techniques, and a cost of the disk apparatus can be reduced by simplifying the structure.

Preferred embodiments of the present invention will be described with reference to the drawings in which:
Fig. 1 is an explanatory, perspective plan view that depicts a schematic configuration of a loading mechanism of a DVD disk apparatus included in a television receiver according to a first embodiment of the present invention;
Fig. 2 is an explanatory, cross-sectional front view that depicts the schematic configuration of the loading mechanism of the DVD disk apparatus according to the first embodiment of the present invention;
Fig. 3 is an explanatory, perspective plan view that depicts the DVD disk apparatus in which a traverse unit is in an inclined state according to the first embodiment of the present invention;
Fig. 4 is an explanatory, perspective front view that depicts the DVD disk apparatus in which the traverse unit is in the inclined state according to the first embodiment of the present invention;
Fig. 5 is an explanatory, perspective plan view that depicts the DVD disk apparatus in which the traverse unit is in a horizontal state according to the first embodiment of the present invention;
Fig. 6 is an explanatory, perspective front view that depicts the DVD disk apparatus in which the traverse unit is in the horizontal state according to the first embodiment of the present invention;
Fig. 7 is an explanatory, perspective plan view that depicts an operation for inserting an eight-centimeter DVD disk into a disk inlet and outlet port according to the first embodiment of the present invention;
Fig. 8 is an explanatory, perspective plan view that depicts an operation for widening a distance between a rotation roller and a fixed roller by the eight-centimeter DVD disk inserted into the DVD disk apparatus, and for starting carrying the DVD disk according to the first embodiment of the present invention;
Fig. 9 is an explanatory, perspective plan view that depicts an operation before the eight-centimeter DVD disk is positioned to a disk attachment portion by the rotation roller and the fixed roller according to the first embodiment of the present invention;
Fig. 10 is an explanatory, perspective plan view that depicts an operation for positioning the eight-centimeter DVD disk to a disk attachment portion by the rotation roller, the fixed roller, and an arm according to the first embodiment of the present invention;
Fig. 11 is an explanatory, perspective plan view that depicts an operation for separating the arm, the rotation roller, and the fixed roller from the eight-centimeter DVD disk by movement of a slider according to the first embodiment of the present invention;
Fig. 12 is an explanatory, perspective plan view that depicts an operation for inserting a twelve-centimeter DVD disk into the disk inlet and outlet port of the same DVD disk apparatus as that according to the first embodiment, according to a second embodiment of the present invention;
Fig. 13 is an explanatory, perspective plan view that depicts an operation for widening the distance between the rotation roller and the fixed roller by the twelve-centimeter DVD disk inserted into the DVD disk apparatus, and for starting carrying the DVD disk according to the second embodiment of the present invention;
Fig. 14 is an explanatory, perspective plan view that depicts an operation before the twelve-centimeter DVD disk is positioned to the disk attachment portion by the rotation roller and the fixed roller according to the second embodiment of the present invention;
Fig. 15 is an explanatory, perspective plan view that depicts an operation for positioning the twelve-centimeter DVD disk in the disk attachment portion by the rotation roller, the fixed roller, and the arm according to the second embodiment of the present invention;
Fig. 16 is an explanatory, perspective plan view that depicts an operation for separating the arm, the rotation roller, and the fixed roller from the twelve-centimeter DVD disk by movement of the slider according to the second embodiment of the present invention; and
Fig. 17 is an explanatory perspective view of the television receiver that includes the DVD disk apparatus according to the present invention.

According to the present invention, there is provided an electronic apparatus that includes a slot-in type disk apparatus that carries a disk with an outer circumference of the disk put between rollers, and that can accurately carry and position any one of a disk having an outside diameter of eight centimeters and a disk having an outside diameter of twelve centimeters. In the following most preferred embodiments, the electronic apparatus that includes the disk apparatus that can carry and position any one of the eight-centimeter disk and the twelve-centimeter disk by causing the disk to be driven by one loading motor will be particularly described.

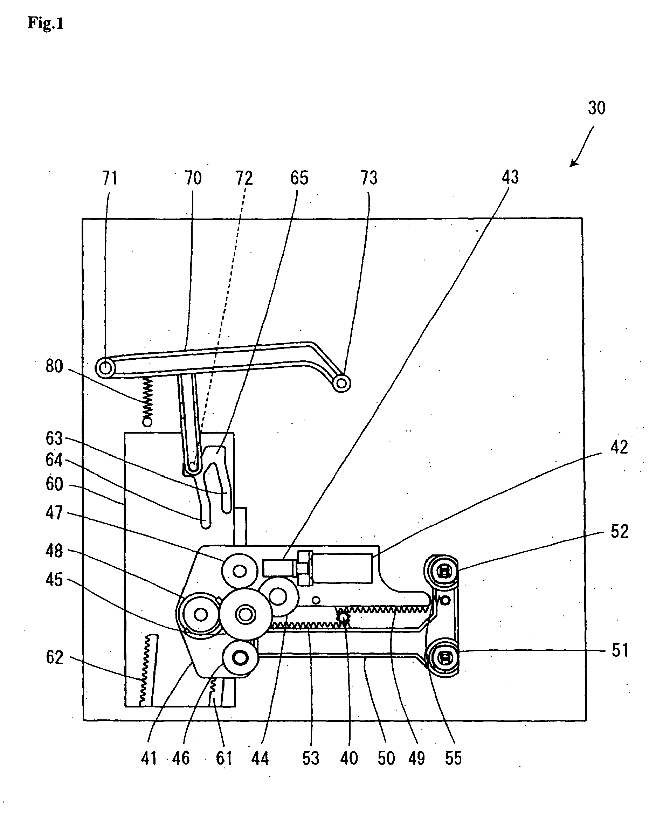

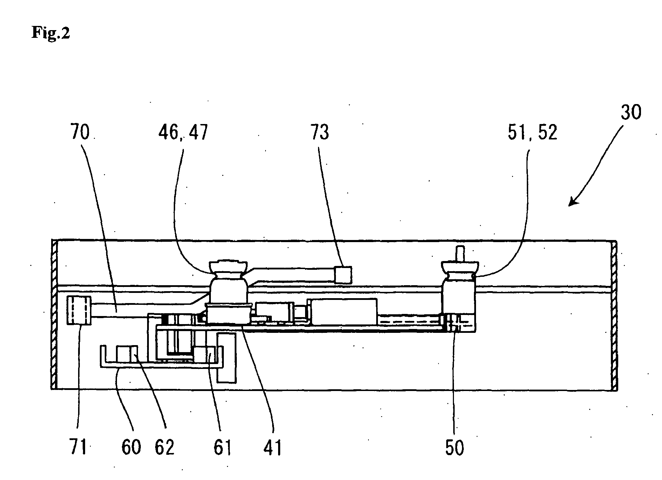

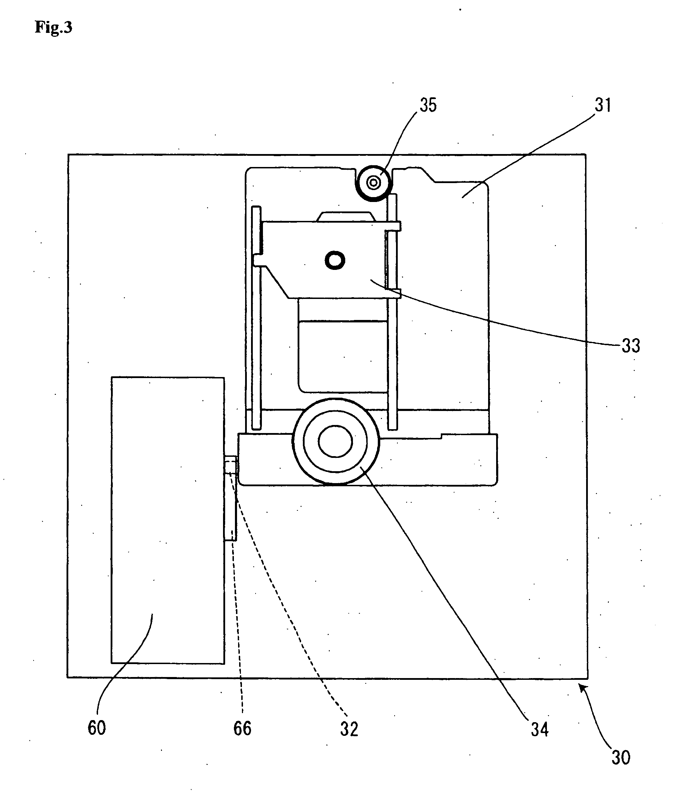

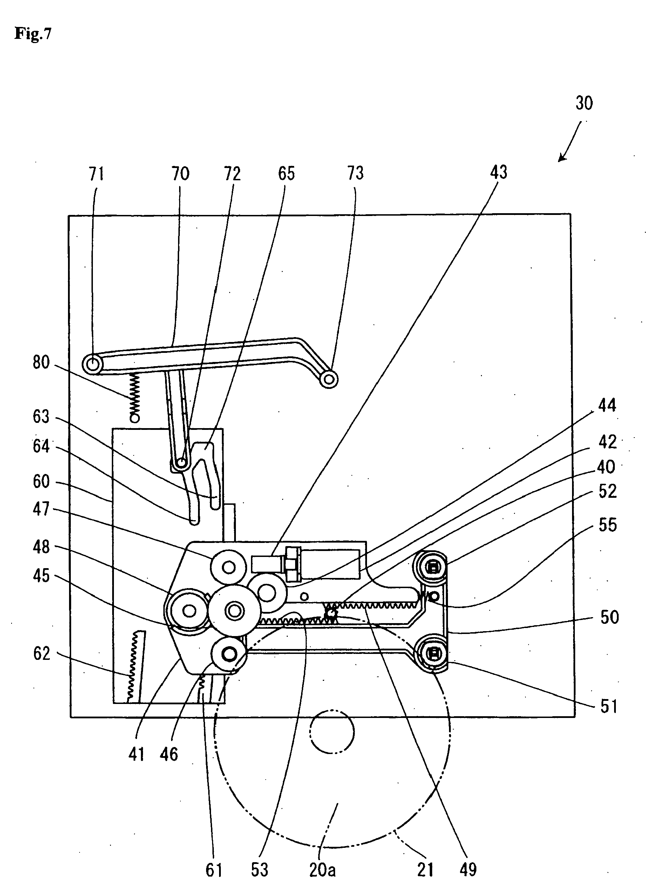

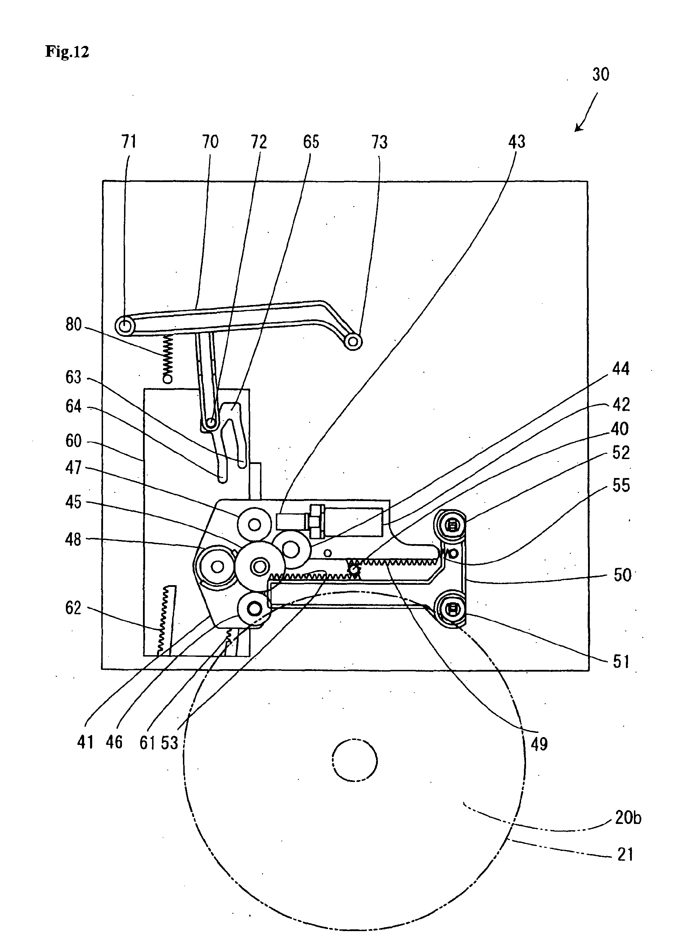

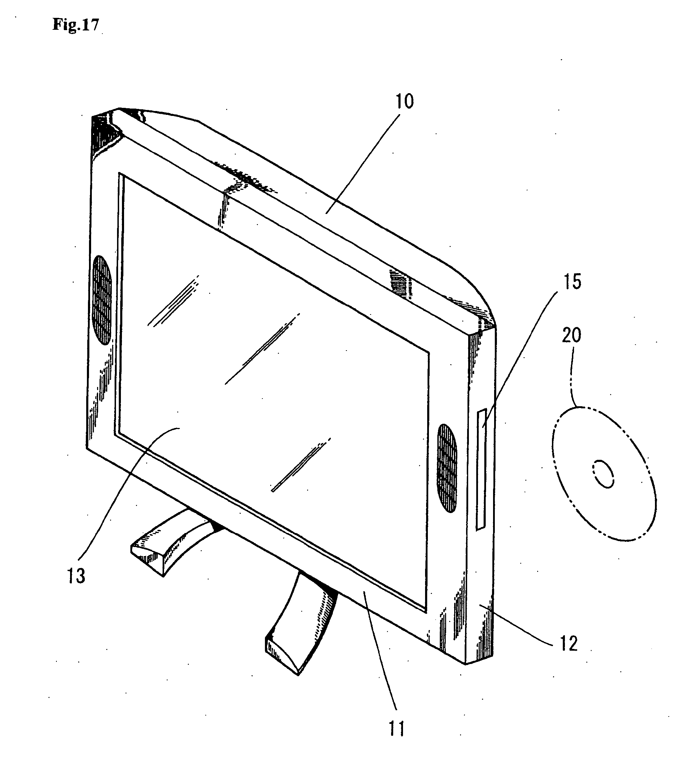

Figs. 1 and 2 are a perspective plan view and a cross-sectional front view that depict a schematic configuration of a loading mechanism of a DVD disk apparatus included in a television receiver according to a first embodiment of the present invention, respectively. Figs. 3 to 6 are a perspective plan view, a perspective front view, a perspective plan view, and a perspective front view that depict operations of a traverse unit according to the first embodiment of the present invention, respectively. Figs. 7 to 11 are perspective plan views that depict operations performed when an eight-centimeter DVD disk is inserted into the apparatus according to the first embodiment of the present invention, respectively. Figs. 12 to 16 are perspective plan views that depict operations performed when a twelve-centimeter DVD disk is inserted into the same DVD disk apparatus as that according to the first embodiment, according to a second embodiment of the present invention, respectively. Fig. 17 is a perspective view that depicts the television receiver that includes the DVD disk apparatus according to the present invention.

### (FIRST EMBODIMENT)

Referring to Fig. 17, a schematic configuration of a television receiver that includes a DVD disk apparatus will be described. In Fig. 17, a display unit 13 is provided on a front surface 11 of a television receiver 10, a disk inlet and outlet port 15 of a DVD apparatus 30 is provided on a side surface 12 of the television receiver 10, and a DVD disk 20 is about to be inserted into the disk inlet and outlet port 15. The DVD disk apparatus 30 included in this television receiver 10 is a so-called slot-in type disk apparatus configured so that the DVD disk 20 is carried into the DVD disk apparatus 30 by a rotation roller and a fixed roller.

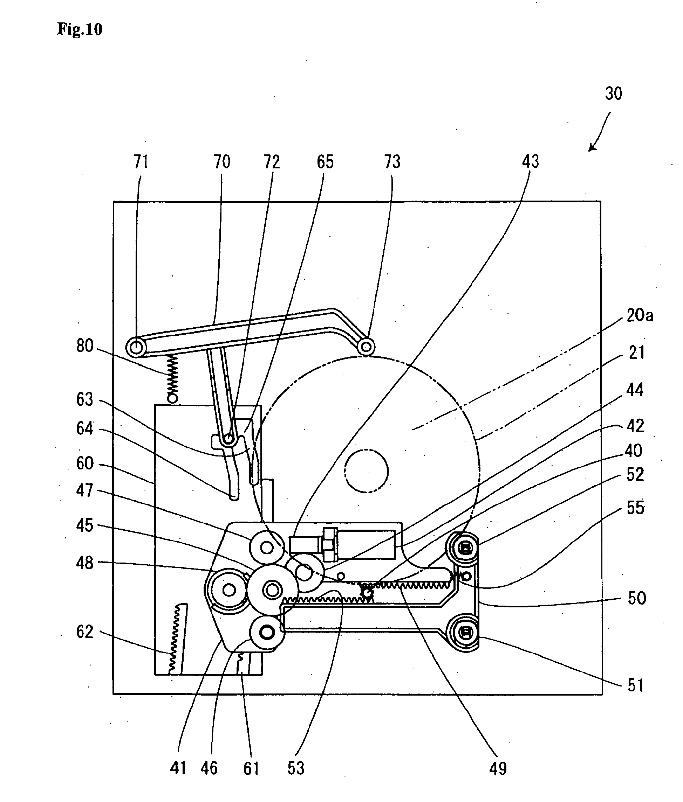

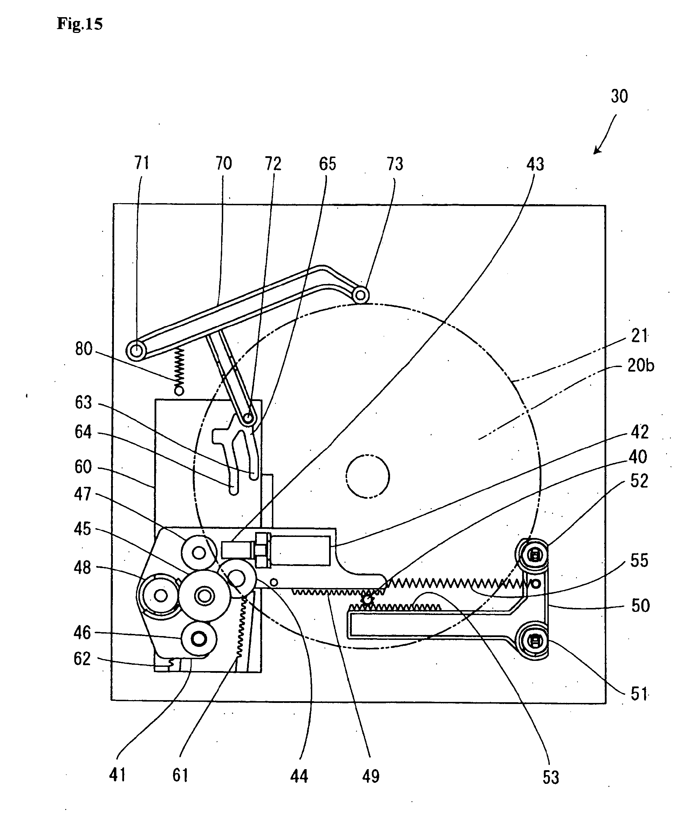

A schematic configuration of the DVD disk apparatus 30 according to the first embodiment will next be described with reference to Figs. 1 and 2. Fig. 1 is a perspective plan view that depicts a schematic configuration of a loading mechanism of the DVD disk apparatus 30 included in the television receiver 10 according to the first embodiment. Fig. 2 is a cross-sectional front view that depicts the schematic configuration of the loading mechanism of the DVD disk apparatus 30 according to the first embodiment. This DVD disk apparatus 30 includes a pair of a first rotation roller 46 and a second rotation roller 47 and a pair of a first fixed roller 51 and a second fixed roller 52 that constitute transport rollers for putting the DVD disk 20, which is a disk-like recording medium, therebetween in a diameter direction of the DVD disk 20. The DVD disk apparatus 30 also includes a driving motor 42 that drives the first rotation roller 46 and the second rotation roller 47 to rotate. By causing this driving motor 42 to drive the first rotation roller 46 and the second rotation roller 47 to rotate, the DVD disk 20 is carried from the disk inlet and outlet port 15 to a disk attachment portion, shown in Figs. 10 and 15, at which position information is recorded or reproduced in or from the DVD disk 20 and the DVD disk 20 is positioned. Further, an arm 70 that contacts with an outer circumferential edge 21 of the DVD disk 20 thus carried to the disk attachment portion and that positions the DVD disk 20 to the disk attachment portion is rotatably and pivotally attached to the DVD disk apparatus 30 by a rotation shaft 71. Further, the DVD disk apparatus 30 includes a first base 41 that supports driving means constituted by the rotation rollers 46 and 47 and the driving motor 42, a second base 50 that supports the fixed rollers 51 and 52, and a slider 60 that drives the arm 70. A first gear 48 engaged with a first rack gear 61 or a second rack gear 62 provided in this slider 60, a second gear 45 that integrally rotates with the rotation rollers 46 and 47, and a relay gear 44 formed into a plurality of stages so as to be engaged with the first gear 48, the second gear 45, and a driving gear 43 that is a worm gear provided on an output shaft of the driving motor 42, respectively are axially supported by the first base 41. It is thereby possible for one driving motor 42 to drive both the rotation rollers 46 and 47 that carry the DVD disk 20 and the slider 60. The rotation rollers 46 and 47 can be rotated by the one driving motor 42 arranged on the first base 41, the relay gear 44 that relays a driving force of the driving motor 42, and the second gear 45 engaged with the relay gear 44. The DVD disk 20 can be carried into the DVD disk apparatus 30 while the DVD disk 20 is put between the rotating rotation rollers 46 and 47 and the fixed rollers 51 and 52 supported by the second base 50. In addition, the driving force of one driving motor 42 arranged on the first base 41 can drive the slider 60 by engaging the first gear 48, which is engaged with the second gear 45, with either the first rack gear 61 or the second rack gear 62 provided on the slider 60. The one driving motor 42 that drives both the rotation rollers 46 and 47 and the slider 60 makes it possible to carry the DVD disk 20 and to position the DVD disk 20 by driving the arm 70 using the slider 60.

The slider 60 has the first rack gear 61 and the second rack gear 62 provided in parallel to correspond to different diameters of the DVD disks 20, i.e., an eight-centimeter disk 20a and a twelve-centimeter disk 20b. The first base 41 and the second base 50 are configured as follows. A third rack gear 49 is formed on the first base 41, a fourth rack gear 53 is formed on the second base 50, and a pinion gear 40 is engaged with the third rack gear 49 and the fourth rack gear 53. The third rack gear 49 and the fourth rack gear 52 constitute an interlocking mechanism for moving the first base 41 and the second base 50 in a direction away from each other in an interlocking manner with an operation for inserting the DVD disk 20a or 20b from the disk inlet and outlet port 15. A first spring 55 that serves as an urging member that urges the first base 41 and the second base 50 in a direction closer to each other is provided between the first base 41 and the second base 50. Using this first spring 55, the DVD disk 20 is elastically put between the rotation rollers 46 and 47 and the fixed rollers 51 and 52. By configuring so, if a DVD disk 20 out of the eight-centimeter disk 20a and the twelve-centimeter disk 20b different in diameter is inserted from the disk inlet and outlet port 15, the distance between the rotation rollers 46 and 47 supported by the first base 41 and the fixed rollers 51 and 52 supported by the second base 50 is widened to correspond to any one of the eight-centimeter disk 20a and the twelve-centimeter disk 20b different in diameter by the interlocking mechanism for moving the first base 41 and the second base 50 in the direction away from each other. Besides, the DVD disk 20a or 20b can be elastically put between the rotation rollers 46 and 47 and the fixed rollers 51 and 52 by the urging member, i.e., the first spring 55, that urges the first base 41 and the second base 50 in the direction closer to each other. It is, therefore, possible to stably carry any one of the eight-centimeter disk 20a and the twelve-centimeter disk 20b different in diameter while putting the disk 20a or 20b between the rotation rollers 46 and 47 and the fixed rollers 51 and 52.

Furthermore, a cam arm 72 is formed on the arm 70, and cam grooves 63 and 64 engaged with the cam arm 72 are formed in the slider 60. The DVD disk 20 contacts with a tip end 73 of the arm 70 and the arm 70 starts moving in an interlocking manner with an operation for carrying the DVD disk 20 by rotation of the rotation rollers 46 and 47. When the DVD disk 20 is carried to the disk attachment portion which is a position to which the DVD disk 20 is positioned as shown in Figs. 10 and 15, the cam arm 72 is engaged with the cam grooves 63 and 64, thereby starting engaging the first gear 48 with either the first rack gear 61 or the second rack gear 62. The driving motor 42 drives the slider 60 to slide in a carrying direction of the DVD disk 20 by engagement of the first gear 48 with either the first rack gear 61 or the second rack gear 62. By doing so, the arm 70 is driven to rotate in a direction away from the DVD disk 20 by the cam arm 72 engaged with the cam grooves 63 and 64. In addition, the first rack gear 61 or the second rack gear 62 is inclined inward along the carrying direction of the DVD disk 20. The rotation rollers 46 and 47 and the fixed rollers 51 and 52, between which the DVD disk 20 is put, are moved to be separated from the DVD disk 20 along an inclination of the first rack gear 61 or the second rack gear 62 in an interlocking manner with a slide operation of the slider 60 in the carrying direction of the DVD disk 20. By configuring so, the cam arm 72 formed on the arm 70 is engaged with the cam grooves 63 and 64 formed in the slider 60, the DVD disk 20 contacts with the arm 70 in the interlocking manner with the carrying operation for carrying the DVD disk 20 by the rotation of the rotation rollers 46 and 47, and the DVD disk 20 is then carried to the disk attachment portion. The engagement of either the first rack gear 61 or the second rack gear 62 with the first gear 48 starts by the engagement of the cam arm 72 with the cam grooves 63 and 64. The driving motor 42 drives the slider 60 to slide in the carrying direction of the DVD disk 20, whereby the arm 70 is driven to rotate by the cam arm 72 engaged with the cam grooves 63 and 64 and can be separated from the DVD disk 20. In addition, the first rack gear 61 or the second rack gear 62 is inclined inward along the carrying direction of the DVD disk 20. The rotation rollers 46 and 47 and the fixed rollers 51 and 52, between which the DVD disk 20 is put, are moved along the inclination of the first rack gear 61 or the second rack gear 62 in the interlocking manner with the slide operation of the slider 60 in the carrying direction of the DVD disk 20, whereby the rotation rollers 46 and 47 and the fixed rollers 51 and 52 can be separated from the DVD disk 20. Therefore, after the DVD disk 20 is positioned to the disk attachment portion, the arm 70, the rotation rollers 46 and 47, and the fixed rollers 51 and 52 are separated from the DVD disk 20. The DVD disk apparatus 30 can thereby record or reproduce information in or from the DVD disk 20 while rotating the DVD disk 20 in the disk attachment portion.

The cam grooves 63 and 64 are arranged generally in parallel to each other while forming the first cam groove 63 that guides the cam arm 72 inside and the second cam groove 64 coupled with the first cam groove 63 outside. The arm 70 is applied with a spring property by providing a second spring 80 so as to be able to press the disk outer circumferential edge 21. It is thereby possible to position any one of the DVD disks 20a and 20b different in diameter by the first cam groove 63 and the second cam groove 64. In addition, since the arm tip end 73 can elastically contact with the outer circumferential edge 21 of the DVD disk 20a or 20b, it is possible to stably position and carry any one of the DVD disks 20a and 20b different in diameter. Further, according to this embodiment, the simple mechanical structure enables the DVD disk apparatus 30 to be applicable to both the DVD disks 20a and 20b different in diameter. Therefore, it is unnecessary to use a plurality of motors and a plurality of sensors differently from the conventional techniques, and a cost of the DVD disk apparatus 30 can be reduced by simplifying the structure.

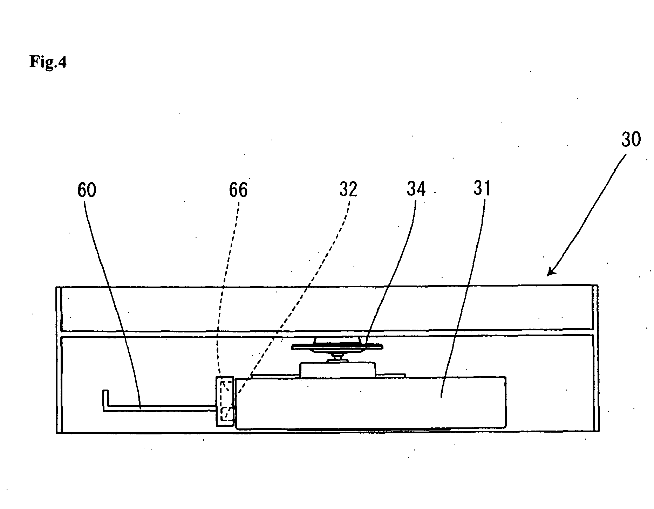

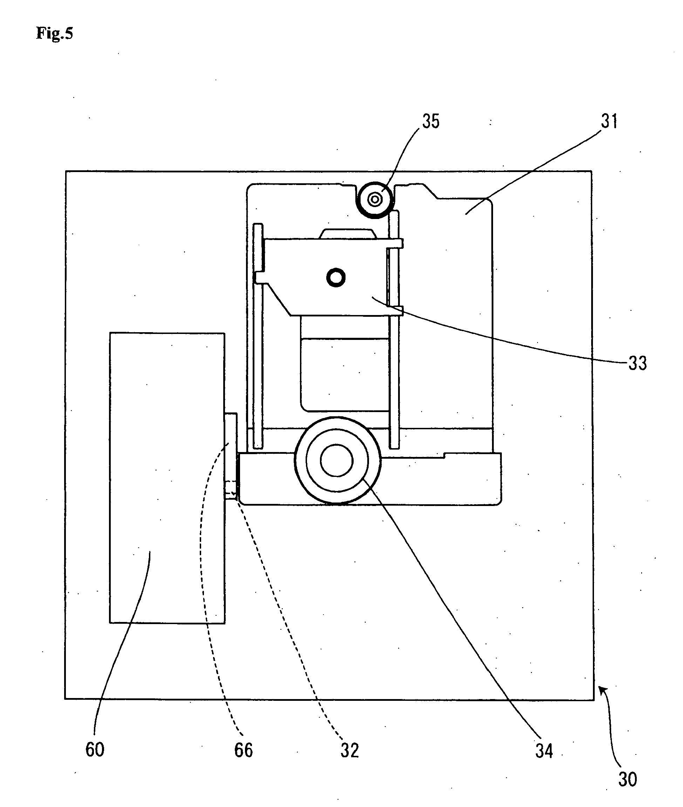

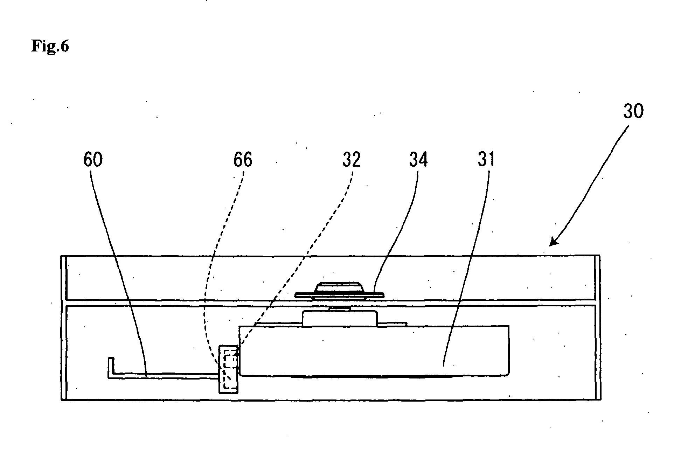

Referring to Figs. 3 to 6, a mechanism and operations for moving a traverse unit 31 upward and downward in the DVD disk apparatus 30 will next be described. In the traverse unit 31, a turntable 34 for mounting and rotating the DVD disk 20 to follow the slide operation of the slider 60 and a pickup unit 33 for recording or reproducing information in or from the DVD disk 20 are arranged. The traverse unit 31 can be moved upward and downward with a buffer 35 set as a fulcrum, i.e., a state of the traverse unit 31 can be changed between an inclined state in which the traverse unit 31 is inclined in a direction of the disk inlet and outlet port 15 for the DVD disk 20 shown as in Figs. 3 and 4, and a horizontal state in which the traverse unit 31 is horizontal as shown in Figs. 5 and 6. The traverse unit 31 is inclined and the turntable 34 is retreated so as not to obstruct the operation for carrying the DVD disk 20 into the DVD disk apparatus 30 by the rotation rollers 46 and 47 and the fixed rollers 51 and 52 shown in Fig. 1. After the DVD disk 20 is carried and positioned to the disk attachment portion, the traverse unit 31 is set horizontal, and the DVD disk 20 is mounted on the turn table 34, whereby the pickup unit 33 can record or reproduce information in or from the DVD disk 20. -

The mechanism and the operations for moving this traverse unit 31 upward and downward will be described in detail. A protrusion 32 is formed on a side surface of the traverse unit 31. The protrusion 32 of the traverse unit 31 is fitted into a third cam groove 66 formed on a side surface of the slider 60. Following the slide operation of the slider 60, the traverse unit 31 is guided along an inclination of the third cam groove 66 and moved upward and downward. Before the DVD disk 20 is inserted into this DVD disk apparatus 30, the traverse unit 31 is in the inclined state, as shown in Figs. 3 and 4, in which a front of the traverse unit 31 in the insertion direction of the DVD disk 20 is inclined so as to prevent the turntable 34 from obstructing insertion of the DVD disk 20. When the DVD disk 20 is inserted, the rotation rollers 46 and 47 arranged on the first base 41 and the fixed rollers 51 and 52 arranged on the second base 50, as shown in Fig. 1, are forced to be widened. The DVD disk 20 is put between the rotation rollers 46 and 47 driven to rotate by the rotation driving force of the driving motor 42 arranged on the first base 41 and the fixed rollers 51 and 52 arranged on the second base 50, and is carried into the DVD disk apparatus 30. Further, the DVD disk 20 is positioned by the three points, i.e., the arm tip end 73, the second rotation roller 47, and the second fixed roller 52. Next, the arm 70 is forced rearward by the DVD disk 20 thus carried, a cam groove coupling portion 65 engaged with the cam arm 72 attracts the slider 60 toward the disk carrying direction, and one of the rack gears 61 and 62 formed on the slider 60 is engaged with the first gear 48 rotated by the rotation driving force of the driving motor 42 on the first base 41. The slider 60 thereby slides in the disk carrying direction, and the traverse unit 31 is moved upward with the buffer 35 set as the fulcrum by the protrusion 32 fitted into the third cam groove 66 formed in the slider 60. By setting this traverse unit 31 in the horizontal state, the DVD disk 20 can be mounted on the turntable 34. The slider 60 slides to thereby force the cam arm 72 engaged with the first cam groove 63 or the second cam groove 64 rearward. The arm tip end 73 can be thereby separated from the outer circumferential edge 21 of the DVD disk 20. Further, the rotation rollers 46 and 47 and the fixed rollers 51 and 52 between which the DVD disk 20 is put are moved along the inclination of the first rack gear 61 or the second rack gear 62 in an interlocking manner with the slide operation of the slider 60 in the carrying direction of the DVD disk 20. The rotation rollers 46 and 47 and the fixed rollers 51 and 52 can be thereby separated from the DVD disk 20. These interlocking operations enable the DVD disk 20 to be rotatably mounted on the turntable 34 shown in Figs. 5 and 6.

Referring next to Fig. 7, an operation for inserting the eight-centimeter DVD disk 20a into the disk inlet and outlet port 15 will be described. The outer circumferential edge 21 of the eight-centimeter DVD disk 20a contacts with the first rotation roller 46 and the first fixed roller 51. This state is before a state in which the distance between the first rotation roller 46 and the first fixed roller 51 are widened by the insertion operation of the disk 20a. In this state, the first base 41 and the second base 50 are urged by the first spring 55 in the direction in which they are closer to each other, and the driving motor 42 supported by the first base 41 does not start rotation driving yet. Further, the first gear 48 supported by the first base 41 is not engaged yet with any one of the rack gears 61 and 62 formed on the slider 60. The arm 70 is applied with the spring property in an inward direction by the second spring 80 so as to be able to press the disk outer circumferential edge 21 of the eight-centimeter disk 20a or the twelve-centimeter disk 20b. The arm tip end 73 is located on an inside diameter side of the outside diameter of the eight-centimeter disk 20a.

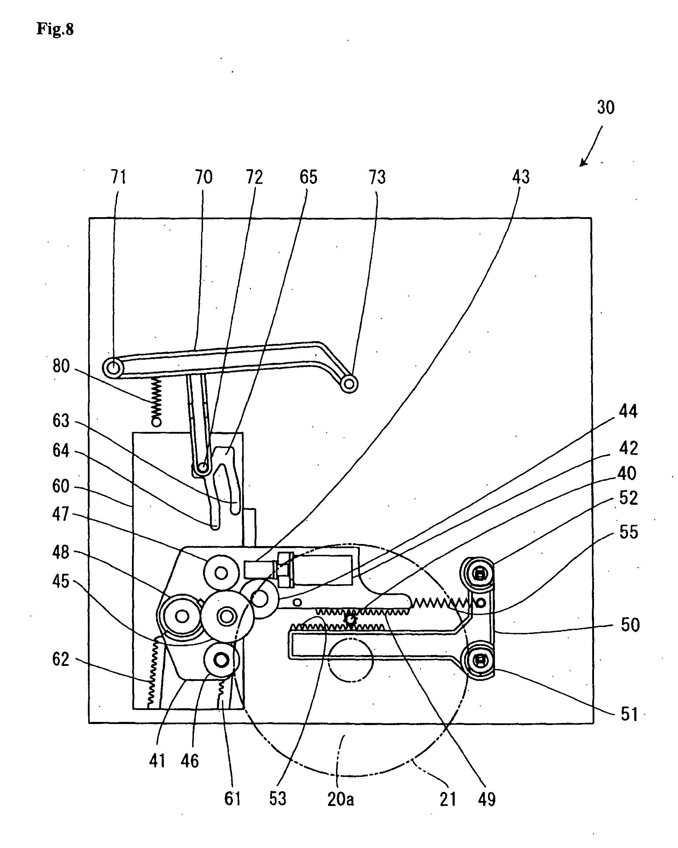

Referring to Fig. 8, an operation for widening the distance between the first rotation roller 46 and the first fixed roller 51 by the inserted eight-centimeter disk 20a and starting carrying the disk 20a will be described. Fig. 8 depicts a state in which the eight-centimeter disk 20a shown in Fig. 7 is slightly forced into the DVD disk apparatus 30 by the insertion operation. The distance between the first rotation roller 46 and the first fixed roller 51 in contact with the outer circumferential edge 21 of the disk 20a is widened. The third rack gear 49 formed on the first base 41 that supports the rotation roller 46 and the fourth rack gear 53 formed on the second base 50 that supports the fixed roller 51 are forced wide in an outside diameter direction of the disk 20a around the pinion gear 40, and the driving motor 42 supported by the first base 41 starts rotation driving. As a result, the relay gear 44 and the second gear 45 transmit the driving force of the driving motor 42 to start driving the first rotation roller 46, the second rotation roller 47, and the first gear 48 to rotate, and the eight-centimeter disk 20a is put between the first rotation roller 46 and the first fixed roller 51 by the urging force of the first spring 55. The eight-centimeter disk 20a is rotated with the first fixed roller 51 set as a fulcrum by rotation driving of the first rotation roller 46, and carried into the DVD disk apparatus 30. The disk 20a then contacts with the second rotation roller 47 and the second fixed roller 52, is rotated with the second fixed roller 52 set as a fulcrum by rotation driving of the second rotation roller 47, and can be, therefore, carried further into the DVD disk apparatus 30. At this moment, the arm 70 remains at the position described with reference to Fig. 7, and the first gear 48 is not engaged yet with any one of the first and second rack gears 61 and 62.

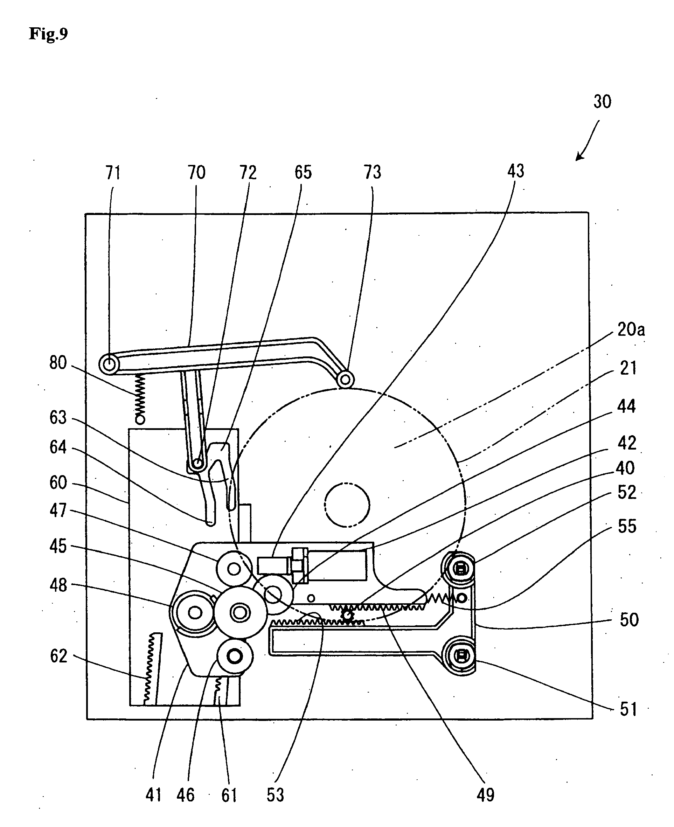

Referring to Fig. 9, an operation before the eight-centimeter disk 20a is positioned to the disk attachment portion by the rotation rollers 46 and 47 and the fixed rollers 51 and 52 and just before the arm 70 abuts on the disk 20a and starts moving will be described. In a state of Fig. 9, the eight-centimeter disk 20a contacts with the arm tip end 73 but the disk 20a does not force the arm 70 out yet. In this state, the disk 20a is put between the second rotation roller 47 and the second fixed roller 52, and the arm tip end 73 abuts on and supports the outer circumferential edge 21 of the disk 20a from rearward. At this moment, the arm 70 remains at the position described with reference to Fig. 7, and the first gear 48 is not engaged yet with any one of the first and second rack gears 61 and 62.

Referring to Fig. 10, an operation for positioning the eight-centimeter disk 20a by the rotation rollers 46 and 47, the fixed rollers 51 and 52, and the arm 70, and for causing the first rack gear 61 to be engaged with the first gear 48 by the retreated arm 70 will be described. In Fig. 10, the eight-centimeter disk 20a abuts on the arm tip end 73, and is positioned to the disk attachment portion, in which information is recorded or reproduced in or from the disk 20a, by the three points, i.e., the arm tip end 73, the second rotation roller 47, and the second fixed roller 52. In addition, the eight-centimeter disk 20a is mounted on the turntable 34 shown in Fig. 5, and put between claws of a rotatable clamper (not shown). Further, the arm tip end 73 is forced rearward of a position of the arm 70 shown in Fig. 9 by the outer circumferential edge 21 of the eight-centimeter disk 20a thus positioned, the cam groove coupling portion 65 engaged with the cam arm 72 attracts the slider 60 toward the disk carrying direction, and the first rack gear 61 formed on the slider 60 is engaged with the first gear 48 for transmitting the rotation driving of the driving motor 42 on the first base 41. At this moment, the driving motor 42 still drives the first rotation roller 46 and the second rotation roller 47 to rotate. Likewise, the first gear 48 is still driven to rotate. By attaching this eight-centimeter disk 20a to the disk attachment portion, the first gear 48 is engaged with the first rack gear 61, thereby starting an operation for moving the slider 60 in the disk carrying direction.

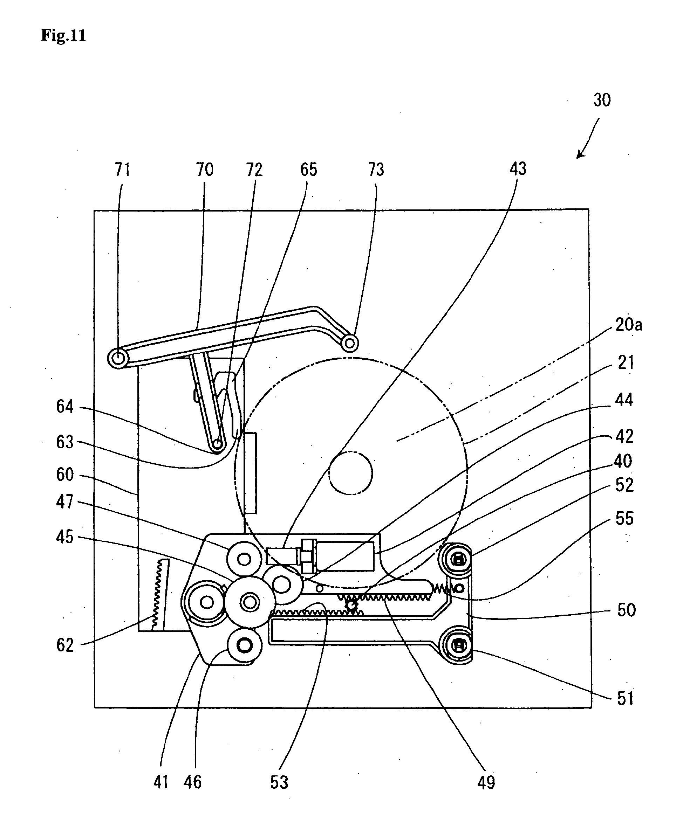

Referring to Fig. 11, an operation for separating the arm 70, the rotation rollers 46 and 47, and the fixed rollers 51 and 52 from the eight-centimeter disk 20a by movement of the slider 60 will be described. In Fig. 11, the eight-centimeter disk 20a is already mounted on the turntable 34 shown in Fig. 5. The first rack gear 61 engaged with the first gear 48 in Fig. 10 is inclined inward along the disk carrying direction, whereby the first gear 48 is rotated while being engaged with the first rack gear 61. Accordingly, the first base 41 that supports the first gear 48, the rotation rollers 46 and 47, and the like starts to be moved outward by the inclination of the first rack gear 61. The fixed rollers 51 and 52 supported by the second base 50 moved in the direction away from the first base 41 in the interlocking manner with the rotation rollers 46 and 47 are also moved outward. Therefore, the second rotation roller 47 and the second fixed roller 52 that have supported the eight-centimeter disk 20a are moved to be away from the outer circumferential edge 21 of the disk 20a. In addition, the cam arm 72 engaged with the second cam groove 64 is forced out by moving the first rack gear 61 in the disk carrying direction, whereby the arm 70 can be separated from the outer circumferential edge 21 of the disk 20a. Accordingly, after the eight-centimeter disk 20a is put between the first and second rotation rollers 46 and 47 and the first and second fixed rollers 51 and 52, carried into the DVD disk apparatus 30, and positioned to the disk attachment portion, the second rotation roller 47, the second fixed roller 52, and the arm tip end 73 that support the disk 20a are separated from the disk 20a. Therefore, these interlocking operations enable the disk 20a to be rotatably mounted on the turntable 34 shown in Fig. 5.

### (SECOND EMBODIMENT)

Referring next to Fig. 12, an operation for inserting a twelve-centimeter DVD disk 20b into the disk inlet and outlet port 15 in the same DVD apparatus 30 as that according to the first embodiment, according to a second embodiment will be described. The outer circumferential edge 21 of the twelve-centimeter DVD disk 20b contacts with the first rotation roller 46 and the first fixed roller 51. This state is before a state in which the distance between the first rotation roller 46 and the first fixed roller 51 is to be widened by the insertion operation of the disk 20b. In this state, the first base 41 and the second base 50 are urged by the first spring 55 in the direction in which they are closer to each other, and the driving motor 42 supported by the first base 41 does not start rotation driving yet. Further, the first gear 48 supported by the first base 41 is not engaged yet with any one of the rack gears 61 and 62 formed on the slider 60. The arm 70 is applied with the spring property in an inward direction by the second spring 80 so as to be able to press the disk outer circumferential edge 21 of the twelve-centimeter disk 20b. The arm tip end 73 is located on an inside diameter side of the outside diameter of the twelve-centimeter disk 20b.

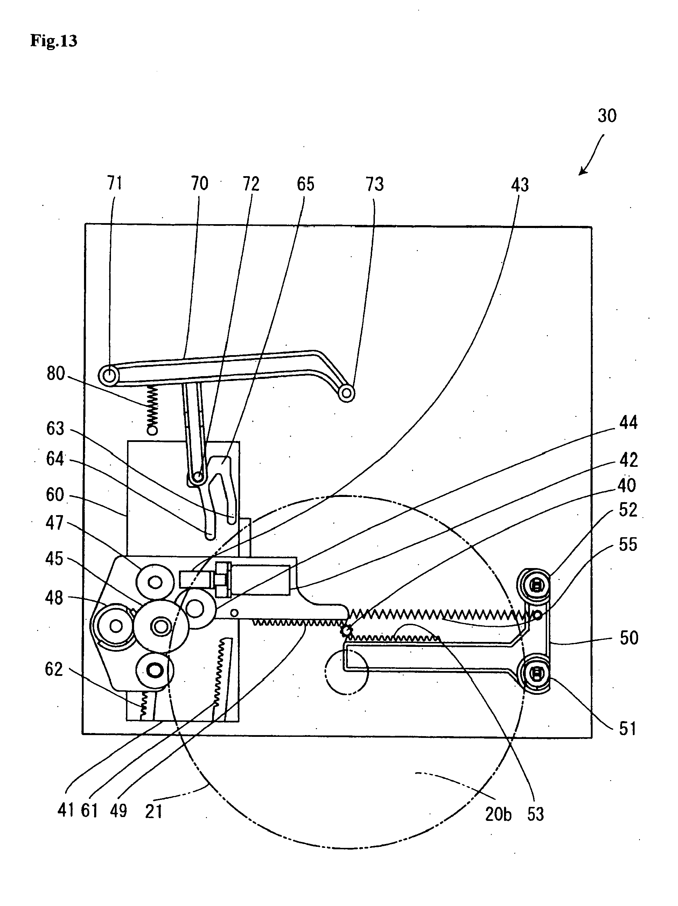

Referring to Fig. 13, an operation for widening the distance between the first rotation roller 46 and the first fixed roller 51 by the inserted twelve-centimeter disk 20b and starting carrying the disk 20b will be described. Fig. 13 depicts a state in which the twelve-centimeter disk 20b shown in Fig. 12 is slightly forced into the DVD disk apparatus 30 by the insertion operation. The distance between the first rotation roller 46 and the first fixed roller 51 in contact with the outer circumferential edge 21 of the disk 20b is widened. The third rack gear 49 formed on the first base 41 that supports the rotation roller 46 and the fourth rack gear 53 formed on the second base 50 that supports the fixed roller 51 are forced wide laterally around the pinion gear 40, and the driving motor 42 supported by the first base 41 starts rotation driving. As a result, the relay gear 44 and the second gear 45 transmit the driving force of the driving motor 42 to start driving the first rotation roller 46, the second rotation roller 47, and the first gear 48 to rotate, and the twelve-centimeter disk 20b is put between the first rotation roller 46 and the first fixed roller 51 by the urging force of the first spring 55. The twelve-centimeter disk 20b is rotated with the first fixed roller 51 set as a fulcrum by rotation driving of the first rotation roller 46, and carried into the DVD disk apparatus 30. The disk 20b then contacts with the second rotation roller 47 and the second fixed roller 52, is rotated with the second fixed roller 52 set as a fulcrum by rotation driving of the second rotation roller 47, and can be, therefore, carried further into the DVD disk apparatus 30. At this moment, the arm 70 remains at the position described with reference to Fig, 12, and the first gear 48 is not engaged yet with any one of the first and second rack gears 61 and 62.

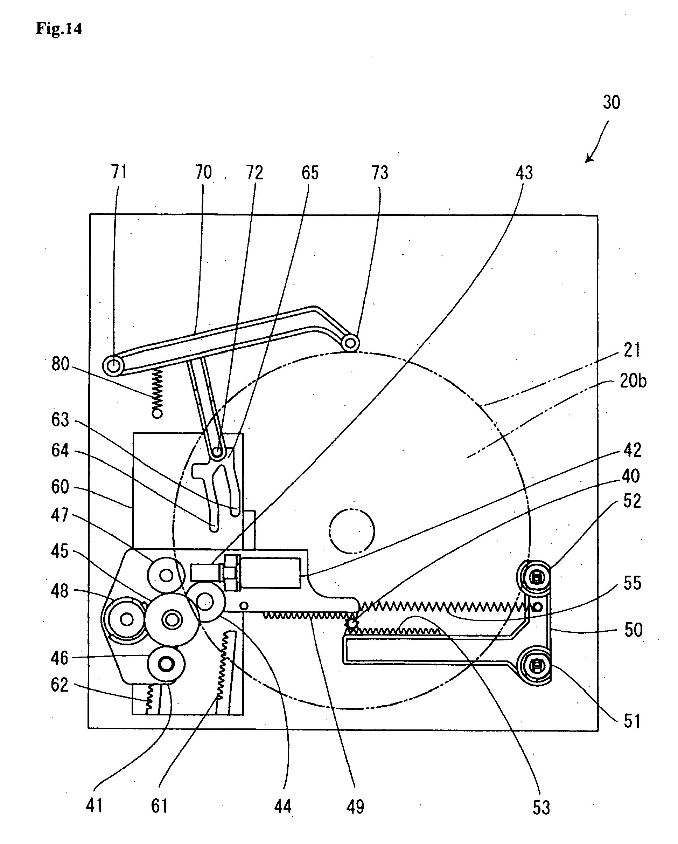

Referring next to Fig. 14, an operation before the twelve-centimeter disk 20b is positioned to the disk attachment portion by the rotation rollers 46 and 47 and the fixed rollers 51 and 52 and just before the arm 70 abuts on the disk 20b and starts moving will be described. In a state of Fig. 14, the twelve-centimeter disk 20b contacts with the arm tip end 73 but the disk 20b does not force the arm 70 out yet. In this state, the disk 20b is put between the second rotation roller 47 and the second fixed roller 52, and the arm tip end 73 abuts on and supports the outer circumferential edge 21 of the disk 20b from rearward. At this moment, the arm 70 remains at the position described with reference to Fig. 7, and the first gear 48 is not engaged yet with any one of the first and second rack gears 61 and 62.

Referring to Fig. 15, an operation for positioning the twelve-centimeter disk 20b by the rotation rollers 46 and 47, the fixed rollers 51 and 52, and the arm 70, and for causing the second rack gear 62 to be engaged with the first gear 48 by the retreated arm 70 will be described. In Fig. 15, the twelve-centimeter disk 20b abuts on the arm tip end 73, and is positioned to the disk attachment portion in which information is recorded or reproduced in or from the disk 20b by the three points, i.e., the arm tip end 73, the second rotation roller 47, and the second fixed roller 52. In addition, the twelve-centimeter disk 20b is mounted on the turntable 34 shown in Fig. 5, and put between claws of a rotatable clamper (not shown). Further, the arm tip end 73 is forced rearward of a position of the arm 70 shown in Fig. 14 by the outer circumferential edge 21 of the twelve-centimeter disk 20b thus positioned, the cam groove coupling portion 65 engaged with the cam arm 72 attracts the slider 60 toward the disk carrying direction, and the second rack gear 62 formed on the slider 60 is engaged with the first gear 48 for transmitting the rotation driving of the driving motor 42 on the first base 41. At this moment, the driving motor 42 still drives the first rotation roller 46 and the second rotation roller 47 to rotate. Likewise, the first gear 48 is still driven to rotate. By attaching this twelve-centimeter disk 20b to the disk attachment portion, the first gear 48 is engaged with the second rack gear 62, thereby starting an operation for moving the slider 60 in the disk carrying direction.

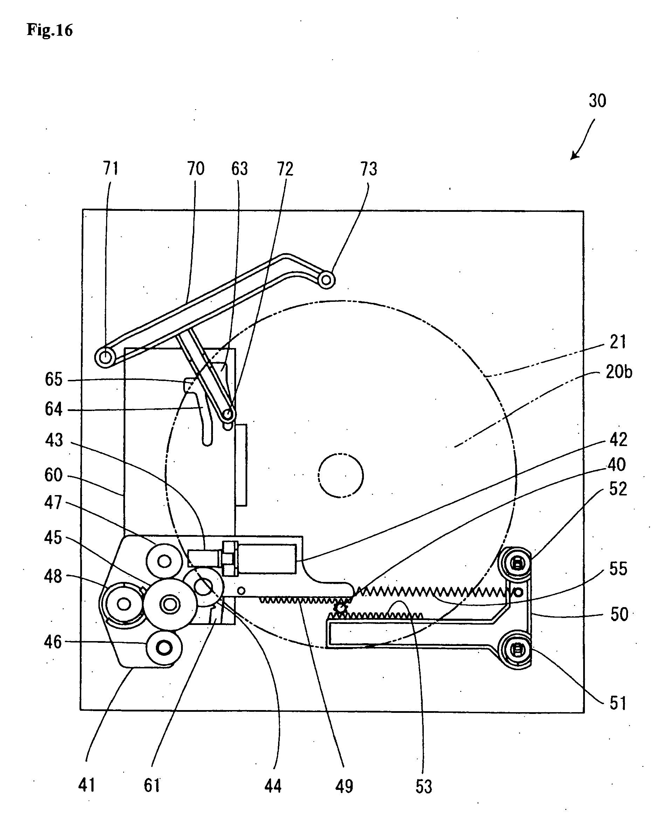

Referring next to Fig. 16, an operation for separating the arm 70, the rotation rollers 46 and 47, and the fixed rollers 51 and 52 from the twelve-centimeter disk 20b by movement of the slider 60 will be described. In Fig. 16, the twelve-centimeter disk 20b is already mounted on the turntable 34 shown in Fig. 5. The second rack gear 62 engaged with the first gear 48 in Fig. 15 is inclined inward along the disk carrying direction, whereby the first gear 48 is rotated while being engaged with the second rack gear 62. Accordingly, the first base 41 that supports the first gear 48, the rotation rollers 46 and 47, and the like starts to be moved outward by the inclination of the second rack gear 62. The fixed rollers 51 and 52 supported by the second base 50 moved in the direction away from the first base 41 in the interlocking manner with the rotation rollers 46 and 47 are also moved outward. Therefore, the second rotation roller 47 and the second fixed roller 52 that have supported the twelve-centimeter disk 20b are moved to be away from the outer circumferential edge 21 of the disk 20b. In addition, the cam arm 72 engaged with the first cam groove 63 is forced out by moving the second rack gear 62 in the disk carrying direction, whereby the arm 70 can be separated from the outer circumferential edge 21 of the disk 20b. Accordingly, after the twelve-centimeter disk 20b is put between the first and second rotation rollers 46 and 47 and the first and second fixed rollers 51 and 52, carried into the DVD disk apparatus 30, and positioned to the disk attachment portion, the second rotation roller 47, the second fixed roller 52, and the arm tip end 73 that support the disk 20b are separated from the disk 20b. Therefore, these interlocking operations enable the disk 20b to be rotatably mounted on the turntable 34 shown in Fig. 5.

As stated so far, in the DVD disk apparatus 30 included in the television receiver 10 according to the embodiments of the present invention, the rotation rollers 46 and 47 can be rotated by the one driving motor 42 arranged on the first base 41, the relay gear 44 that relays the driving force of the driving motor 42, and the second gear 45 engaged with the relay gear 44. The DVD disk 20 can be carried into the DVD disk apparatus 30 while the DVD disk 20 is put between the rotating rotation rollers 46 and 47 and the fixed rollers 51 and 52 supported by the second base 50. In addition, the driving force of one driving motor 42 arranged on the first base 41 can drive the slider 60 by engaging the first gear 48, which is engaged with the second gear 45, with either the first rack gear 61 or the second rack gear 62 provided on the slider 60. The one driving motor 42 that drives both the rotation rollers 46 and 47 and the slider 60 makes it possible to carry the DVD disk 20 and to position the DVD disk 20 to the disk attachment portion by driving the arm 70 using the slider 60.

Further, in the DVD disk apparatus 30 included in the television receiver 10 according to the embodiments of the present invention, if the DVD disk 20 out of the eight-centimeter disk 20a and the twelve-centimeter disk 20b different in diameter is inserted from the disk inlet and outlet port 15, the rotation rollers 46 and 47 supported by the first base 41 and the fixed rollers 51 and 52 supported by the second base 50 are widened to correspond to any one of the eight-centimeter disk 20a and the twelve-centimeter disk 20b different in diameter by the interlocking mechanism for moving the first base 41 and the second base 50 in the direction away from each other. Besides, the DVD disk 20a or 20b can be elastically put between the rotation rollers 46 and 47 and the fixed rollers 51 and 52 by the urging member, i.e., the first spring 55, that urges the first base 41 and the second base 50 in the direction closer to each other. It is, therefore, possible to stably carry any one of the eight-centimeter DVD disk 20a and the twelve-centimeter DVD disk 20b while putting the disk 20a or 20b between the rotation rollers 46 and 47 and the fixed rollers 51 and 52.

Furthermore, in the DVD disk apparatus 30 included in the television receiver 10 according to the embodiments of the present invention, the cam arm 72 formed on the arm 70 is engaged with the cam grooves 63 and 64 formed in the slider 60, the DVD disk 20 contacts with the arm 70 in the interlocking manner with the carrying operation for carrying the DVD disk 20 by the rotation of the rotation rollers 46 and 47, and the DVD disk 20 is then carried to the disk attachment portion. The engagement of either the first rack gear 61 or the second rack gear 62 with the first gear 48 starts by the engagement of the cam arm 72 with the cam grooves 63 and 64. The driving motor 42 drives the slider 60 to slide in the carrying direction of the DVD disk 20, whereby the arm 70 is driven to rotate by the cam arm 72 engaged with the cam grooves 63 and 64 and can be separated from the DVD disk 20. In addition, the first rack gear 61 or the second rack gear 62 is inclined inward along the carrying direction of the DVD disk 20. The rotation rollers 46 and 47 and the fixed rollers 51 and 52, between which the DVD disk 20 is put, are moved along the inclination of the first rack gear 61 or the second rack gear 62 in the interlocking manner with the slide operation of the slider 60 in the carrying direction of the DVD disk 20, whereby the rotation rollers 46 and 47 and the fixed rollers 51 and 52 can be separated from the DVD disk 20. Therefore, after the DVD disk 20 is positioned to the disk attachment portion, the arm 70, the rotation rollers 46 and 47, and the fixed rollers 51 and 52 are separated from the DVD disk 20. The DVD disk apparatus 30 can thereby record or reproduce information in or from the DVD disk 20 while rotating the DVD disk 20 in the disk attachment portion.

Further, in the DVD disk apparatus 30 included in the television receiver 10 according to the embodiments of the present invention, it is possible to stably position and carry any one of the DVD disks 20a and 20b different in diameter. Further, according to this embodiment, the simple mechanical structure enables the DVD disk apparatus 30 to be applicable to both the DVD disks 20a and 20b different in diameter. Therefore, in the slot-in type DVD disk apparatus 30 configured so that the DVD disk 20a or 20b different in diameter is carried into the DVD disk apparatus 30 with the outer circumferential edge 21 of the DVD disk 20a or 20b put between the rotation rollers 46 and 47 and the fixed rollers 51 and 52, it is possible to accurately carry and position the eight-centimeter disk 20a and the twelve-centimeter disk 20b by the simple mechanical structure using one driving motor 42. Therefore, it is unnecessary to use a plurality of driving motors and a plurality of position sensors differently from the conventional techniques, and a cost of the DVD disk apparatus 30 can be reduced by simplifying the structure. Accordingly, a cost of the television receiver 10 that includes this DVD disk apparatus 30 can be reduced.

The present invention is easily applicable to configurations other than those described in the embodiments within the scope of the present invention. The embodiments of the present invention have been described so far. However, the present invention is not limited to these embodiments but various changes and modifications can be made of the present invention within the scope of the invention. For example, the electronic apparatus that includes the disk apparatus is not limited to the television receiver 10 including the DVD disk apparatus 30 but may be a disk recording and reproducing apparatus that functions independently. The disk-like recording medium is not limited to the DVD disk 20 but may be an arbitrary disk-like recording medium such as a CD disk or an MD disk as long as the disk-like recording medium is inserted into the electronic apparatus and information can be recorded or reproduced in or from the recording medium. Further, the cam grooves 63 and 64 formed in the slider 60, the cam arm 72 provided on the arm 70, and the like can be arbitrarily selected by, for example, changing shapes, arrangements thereof in view of easiness of design and assembly operation.

## Claims

1. An electronic apparatus including a disk apparatus, the disk apparatus comprising:
transport rollers constituted by a pair of rotation rollers and a pair of fixed rollers for putting a disk-like recording medium therebetween in a diameter direction of the disk-like recording medium; and
a driving motor that drives the rotation rollers to rotate, the driving motor caused to drive the rotation rollers to rotate to thereby carry the disk-like recording medium from a disk inlet and outlet port to a disk attachment portion in which information is recorded or reproduced in or from the disk-like recording medium, an arm rotatably and pivotally attached to the disk apparatus, the arm contacting with an outer circumferential edge of the disk-like recording medium thus carried to the disk attachment portion and positioning the disk-like recording medium to the disk attachment portion, wherein
the disk apparatus further comprises:
a first base that supports the rotation rollers and the driving motor, a second base that supports the fixed rollers, and a slider that drives the arm, and wherein
a first gear engaged with a rack gear provided on the slider, a second gear that integrally rotates with the rotation rollers, and a plurality of relay gears engaged with the first gear, the second gear, and a driving gear provided on an output shaft of the driving motor, respectively are axially supported by the first base, whereby the one driving motor drives both the rotation rollers that carry the disk-like recording medium and the slider.

2. The electronic apparatus including the disk apparatus according to claim 1, wherein
the slider has a first rack gear and a second rack gear provided in parallel to correspond to different diameters of the disk-like recording medium,
an interlocking mechanism is provided for the first base and the second base so as to move the first base and the second base in a direction away from each other in an interlocking manner with an operation for inserting the disk-like recording medium from the disk inlet and outlet port, and
an urging member that urges the first base and the second base in a direction closer to each other is provided between the first base and the second base, the urging member enabling the disk-like recording medium to be elastically put between the rotation rollers and the fixed rollers.

3. The electronic apparatus including the disk apparatus according to claim 2, wherein
a cam arm is formed on the arm, and cam grooves engaged with the cam arm are formed in the slider,
the disk-like recording medium contacts with the arm and the arm starts moving in an interlocking manner with an operation for carrying the disk-like recording medium by rotation of the rotation rollers,
when the disk-like recording medium is carried to the disk attachment portion, the cam arm is engaged with the cam grooves, thereby starting engaging the first gear with any one of the first rack gear and the second rack gear,
the driving motor drives the slider to slide in a carrying direction of the disk-like recording medium by engagement of the first gear with any one of the first rack gear and the second rack gear, whereby the arm is driven to rotate in a direction away from the disk-like recording medium by the cam arm engaged with the cam grooves, and
the first rack gear or the second rack gear is inclined inward along the carrying direction of the disk-like recording medium, whereby the rotation rollers and the fixed rollers, between which the disk-like recording medium is put, are moved to be separated from the disk-like recording medium along an inclination of the first rack gear or the second rack gear in an interlocking manner with a slide operation of the slider in the carrying direction of the disk-like recording medium.

4. The electronic apparatus including the disk apparatus according to claim 3, wherein
the cam grooves are arranged generally in parallel to each other while forming the first cam groove that guides the cam arm inside and the second cam groove coupled with the first cam groove outside, and
the arm is applied with a spring property so as to be able to press the outer circumferential edge of the disk-like recording medium.
